(19) Europäisches Patentamt
European Patent Office
Office européen des brevets

(11) **EP 4 360 790 A1**

(12) **EUROPEAN PATENT APPLICATION**

(43) Date of publication:
**01.05.2024 Bulletin 2024/18**

(21) Application number: **22204738.3**

(22) Date of filing: **31.10.2022**

(51) International Patent Classification (IPC):
***B23G 5/18*** *(2006.01)*

(52) Cooperative Patent Classification (CPC):
**B23G 5/18;** B23C 2200/0405; B23C 2200/086;
B23C 2200/3691; B23G 2200/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **WALTER AG**
**72072 Tübingen (DE)**

(72) Inventors:
• **Dürr, Hans-Peter**
**72072 Tübingen (DE)**
• **BOEHNKE, David**
**72072 Tübingen (DE)**

(74) Representative: **Sandvik**
**Sandvik Intellectual Property AB**
**811 81 Sandviken (SE)**

(54) **CUTTING ELEMENT AND THREAD MILLING TOOL WITH SUCH A CUTTING ELEMENT**

(57) The present invention relates to an indexable cutting element (1, 30, 60) for a thread milling tool comprising a first and a second main surface (2,3) arranged opposite each other and facing opposite directions, and a peripheral surface (4) connecting the first and the second main surfaces, the peripheral surface comprising an even number of at least four peripheral sub-surfaces (5, 5', 6, 6', 7, 7') that are pairwise arranged on opposite sides of the cutting element and facing opposite directions. For each pair of peripheral sub-surfaces, one sub-surface includes one or more thread cutting teeth (9) having a rake face (15) facing a first direction (S1), and the opposite sub-surface includes a non-cutting surface (18, 19, 31, 32) and/or one or more thread cutting teeth (9) having a rake face (15) facing a second direction (S2), wherein the second direction (S2) is opposite to the first direction (S1).

Fig. 5

EP 4 360 790 A1

## Description

TECHNICAL FIELD

The invention relates to metal cutting, and in particular to tools for milling threads in metal workpieces.

BACKGROUND ART

Various methods for machining threads in metal workpieces are known. One such method is thread milling, wherein threads are produced by using a circular ramping movement of a rotating thread milling tool, i.e. using helical interpolation tool paths wherein, during one revolution along the workpiece surface, the tool moves along the rotational axis a distance corresponding to the thread pitch.

Some thread milling tools comprise exchangeable cutting elements or inserts, often made of cemented carbide. WO2005080037 discloses a slot milling cutter in which a single cutting insert is mounted in a slot in the front of the tool. The cutting insert has two diametrically opposed sets of cutting teeth arranged such as to engage a workpiece during cutting. The cutting insert has serrations co-operating with serrations in the slot for stabilizing the positioning of the cutting insert in a radial direction of the thread milling cutter.

As any other cutting elements, thread milling cutting elements are subjected to wear during the cutting process and will eventually wear out and need to be replaced. For efficiency and economic reasons, it may be desirable to use a cutting element for as long as possible.

Hence, there is a need to increase the tool life of a cutting element for a thread milling tool.

SUMMARY

It is an object of the present invention to mitigate the shortcomings of the prior art and to provide a cutting element for a thread milling tool of the type discussed above that can be used for a long period of time before it has to be exchanged.

Thus, according to a first aspect, the invention relates to a cutting element for a thread milling tool comprising a first and a second main surface arranged opposite each other and facing opposite directions, and a peripheral surface connecting the first and the second main surfaces. The peripheral surface comprises an even number of peripheral sub-surfaces that are pairwise arranged on opposite sides of the cutting element and facing opposite directions. For each pair of peripheral sub-surfaces, one sub-surface includes one or more thread cutting teeth having a rake face facing a first direction, and the opposite sub-surface includes a non-cutting surface and/or one or more thread cutting teeth having a rake face facing a second direction, wherein the second direction is opposite to the first direction. The number of peripheral sub-surfaces is at least four.

Thereby, the cutting element is indexable, i.e. mountable in at least two different orientations within a slot of a thread milling tool body, such that different pairs of peripheral sub-surfaces are active depending on in which orientation the cutting element is mounted. As a consequence, the tool life of the cutting element is prolonged. Indexable cutting elements are previously known for many different kinds of cutting tools, but not for thread milling tools of the type described herein.

It may be preferred that both sub-surfaces of each pair of peripheral sub-surfaces comprises one or more thread cutting teeth, since this will provide high productivity. However, it is also envisaged that only one sub-surface of each pair of peripheral sub-surfaces comprises one or more thread cutting teeth, and that the opposite sub-surface only comprises a non-cutting surface, for example a flat surface arranged such that, when the cutting element is mounted within a slot of a thread milling tool body, it does not extend beyond the periphery of the tool body, or at least not extending so far such as to interfere in the thread cutting process.

The first main surface and the second main surface may be flat surfaces, or substantially flat surfaces, that extend in planes that are parallel to each other. A central neutral plane is located between, and may extend in parallel to, the planes in which the first and the second main surfaces extend. A central axis of the cutting element extends from the first main surface to the second main surface, perpendicular to the central neutral plane.

The cutting element may comprise a through-hole extending along the central axis of the cutting element from the first main surface to the second main surface. Such through-hole may be used when securing the cutting element within a slot of a thread milling tool body, for example by using a screw or other fastening element.

Each thread cutting tooth may comprise a rake face and a flank face (or clearance face), and a cutting edge formed at the intersection between the rake face and the flank face.

The rake faces of the thread cutting teeth may extend in respective planes that correspond to, or is parallel to, the planes in which the first and second main surfaces extend. In other words, the first and second directions, that are opposite to each other, may be perpendicular to such planes.

In other embodiments, the rake faces are not located in planes that are parallel to the planes in which the first and second main surface extend, and may instead be inclined with respect to such planes, for example in order to obtain optimal rake angles. Moreover, each rake face is not necessarily a flat surface but may have a partly curved shape and include additional geometrical features, such as chip grooves, for improved operation, e.g. smoother cutting, improved chip breaking, etc.

Moreover, it is envisaged that the rake faces of the teeth may be slightly inclined towards the central plane also in a circumferential direction along the peripheral sub-surface, creating a small helix angle for smoother cutting.

The first and second directions being opposite each other should be understood as opposite at least when seen in a side view of the cutting element towards the peripheral surface along a direction parallel to the directions in which the respective opposed peripheral sub-surfaces extend.

The second direction being opposite to the first direction corresponds to an arrangement wherein the surface normals at corresponding points on respective rake faces of thread cutting teeth on opposed peripheral sub-surfaces, the points being located either in the central plane or on different sides of the central plane, will both be directed either towards the central plane or away from the central plane on different sides thereof.

The cutting element may have a positive basic shape. It is also envisaged that the cutting element is negative. The cutting element may be made from a wear resistant material, such as cemented carbide.

Each pair of peripheral sub-surfaces are arranged on opposite sides of the cutting element and face opposite directions. Opposite directions, as used when referring to the directions faced by the peripheral sub-surfaces, should be understood as directions that are opposite to each other at least when seen in a plan view of the first or second main surface.

In view of a peripheral sub-surface comprising one or more thread cutting teeth, the direction faced by such peripheral sub-surface, as used herein, should be understood as the direction the surface would face in the absence of such teeth, or the direction in which such thread cutting teeth protrude. When seen in a plan view of the first or second main surface, this direction would be a radial direction with respect to the central axis of the cutting element, outwards from the peripheral sub-surface and perpendicular to the direction along which the thread cutting teeth are arranged in a row on the peripheral sub-surface.

For some embodiments, the surface normals of any two diametrically opposed points on respective sub-surfaces of a pair of peripheral sub-surfaces (i.e. points on opposite sides both with respect to the central axis and the central plane of the cutting element) will be parallel, but extend in opposite directions away from each other, i.e. the angle between such surface normals will be 180°.

The peripheral sub-surfaces may adjoin each other, one after the other, along the peripheral surface in a circumferential direction all the way around the central axis of the cutting element, e.g. with no other intermediate sections of the peripheral surface located between the peripheral sub-surfaces. The peripheral surface may thus be formed completely by the peripheral sub-surfaces, but it is also envisaged that the peripheral surface may comprise additional segments that are not considered as parts of any peripheral sub-surface according to the present disclosure, e.g. the peripheral surface may comprise parts that face different directions than any of the peripheral sub-surfaces.

According to some embodiments, the cutting element has six peripheral sub-surfaces. Preferably, the peripheral sub-surfaces are symmetrically arranged around the peripheral surface of the cutting element. A cutting element with six peripheral sub-surfaces not only provides for increased tool life, since indexable as much as three times, but also has a design that makes it particularly easy to provide suitable contact surfaces arranged to abut corresponding support surfaces in a slot of a thread milling tool body, that may help stabilizing the cutting element with respect to the thread milling tool body. However, it is also envisaged that the cutting element may have fewer, such as four, or more, such as eight or ten, peripheral sub-surfaces and that suitable contact surfaces may be applied also on such cutting elements.

According to some embodiments, each peripheral sub-surface includes one or more non-cutting surfaces and one or more thread cutting teeth. Non-cutting surfaces may be located on either or both sides of the central neutral plane. Preferably, each peripheral sub-surface has the same number of thread cutting teeth. According to some embodiments, each peripheral sub-surface comprises two or more thread cutting teeth arranged in a row along the peripheral sub-surface. It may be beneficial to have as many cutting teeth as possible. However, the number of cutting teeth that is possible to apply on a peripheral sub-surface may be limited depending on the size of the cutting element and the type of thread (e.g. the pitch and dimension) being machined. According to some embodiments, each peripheral sub-surface has three thread cutting teeth.

If having more than one cutting tooth on each peripheral sub-surface, some level of redundancy is obtained, such that the cutting element is not dependent on that all cutting teeth are undamaged. For example, even if one tooth in a row of teeth on a peripheral sub-surface is worn out or damaged in some way, the cutting element does not necessarily need to be indexed or replaced immediately since the remaining undamaged teeth in the row will assure that the correct thread profile is machined in the workpiece. Accordingly, if having two or more thread cutting teeth arranged in a row on each peripheral sub-surface, the tool life may be increased.

According to some embodiments, the directions that two adjacent peripheral sub-surfaces along the peripheral surface face, when viewed in a plan view of the first or second main surface, differ by an angle equal to 360° divided by the total number of peripheral sub-surfaces. Thereby, the peripheral sub-surfaces will be symmetrically arranged around the central axis of the cutting element, forming a cutting element that in a plan view of the first or second main surface has the general shape of a regular polygon with a number of sides that corresponds to the number of peripheral sub-surfaces. Thereby, the cutting element will be easily mountable in different orientations within a slot of a thread milling tool body.

According to some embodiments wherein the cutting element comprises six peripheral sub-surfaces, the respective rake faces of teeth in adjacent peripheral sub-surfaces face different directions. The different directions may be entirely opposite, which would be the case if the respective rake faces extend in planes that are parallel to each other. On the other hand, if the rake faces are not arranged in parallel, the directions faced by the respective rake faces may not be entirely opposite. In any case, both of the respective rake faces, when located on different sides of the central plane of the cutting element, will face either towards the central plane or away from the central plane.

Such configuration may be preferred for a cutting element having six peripheral sub-surfaces, but could also be applied on a cutting element having a higher number of peripheral sub-surfaces, such as ten. Thereby, indexing of the cutting element can be performed by, with respect to a thread milling tool body, rotating the cutting element around its central axis by an angle corresponding to $2 \cdot \frac{360}{n}$, where n is the number of peripheral sub-surfaces. In other words, for a cutting element with six peripheral sub-surfaces symmetrically arranged around the central axis of the cutting element, indexing is done by rotating the cutting element around its central axis by an angle of 120°.

According to some embodiments, the rake face of each thread cutting tooth comprises a chip groove. A chip groove, resulting in an increased (more positive) rake angle, may improve chip formation control and may be beneficial when machining certain workpiece materials. For example, such chip groove may result in reduced cutting forces and reduced temperature, thereby providing improved surface integrity of the machined workpiece.

According to some embodiments, the cutting element is a unitary body. Such unitary body may be a body completely made from cemented carbide, either directly pressed and sintered to its final shape, or combined from multiple parts that have been non-detachably connected to each other during sintering or, for example, by brazing or any other suitable means for connecting the parts into a unitary body. For example, such cutting element may be formed by two identical parts connected to each other, wherein each of the identical parts has at least four peripheral sub-surfaces, each having either a non-cutting surface or one or more thread cutting teeth, and wherein the identical parts are connected in a manner such that each of the resulting at least four peripheral sub-surfaces comprises both a non-cutting surface (from one of the identical parts) and one or more thread cutting teeth (from the other part). Instead of being formed as a unitary body, it is also envisaged that the cutting element is formed by two such identical parts that are not attached to each other but fixed in a configuration as discussed above when mounted together in a slot of a thread milling tool body.

Hence, according to some embodiments, the cutting element comprises two separate parts detachably arranged to each other. Apart from the simplified manufacturing process, such cutting element may also provide other benefits. For example, the non-fixed interface between the parts, allowing slight movement therebetween, may have a beneficial damping effect during machining, e.g. reducing vibrations, and thereby improve the machining result.

According to some embodiments, the cutting element comprises at least two contact surfaces facing different directions and arranged to abut respective support surfaces in a slot of a tool body for preventing displacement of the cutting element with respect to the tool body when the cutting element is mounted in the slot.

The contact surfaces are preferably arranged such that, when the cutting element is mounted in a slot of a thread milling tool body, each contact surface that abuts a corresponding support surface in the slot extends in a direction that is oblique to a central axis of the thread milling tool body. Thereby, with two such obliquely arranged contact surfaces facing different directions, and abutting corresponding support surfaces in the slot of the thread milling tool body, a stable fixation of the cutting element with respect to the tool body is obtained.

According to some embodiments, the contact surfaces are formed by the non-cutting surfaces included in the peripheral sub-surfaces. Thereby, a convenient design for stabilizing the cutting element within a slot of a thread milling tool body is obtained, wherein no additional contact surfaces arranged to face other directions than the peripheral sub-surfaces are required. Nonetheless, according to alternative embodiments, additional contact surfaces may be formed in the peripheral surface that are not part of any of the peripheral sub-surfaces.

For example, for a cutting element having only four peripheral sub-surfaces, i.e. a square or substantially square cutting element when seen in a plan view of the first or second main surface, it may not be suitable to employ any non-cutting surface on the peripheral sub-surfaces as contact surfaces since no peripheral sub-surface would extend in an oblique direction to a central axis of the thread milling tool body when the cutting element is mounted in a slot thereof. In such cases, dedicated contact surfaces may be formed in the peripheral surface that are not part of the peripheral sub-surfaces according to this disclosure, and that do not face the same direction as any of the peripheral sub-surfaces.

On the other hand, in view of a cutting element having six peripheral sub-surfaces, non-cutting surfaces on two adjacent peripheral sub-surfaces may be suitable to use as contact surfaces when mounting the cutting element in a slot of a thread milling tool body.

According to some embodiments, each peripheral sub-surface includes two non-cutting surfaces forming separate contact surfaces. For example, each peripheral sub-surface may include one or more teeth arranged in a row along the peripheral sub-surface in a circumferential direction with respect to the central axis of the cutting element, as well as a non-cutting surface arranged adjacent the first main surface (i.e. between the first main surface and the row of thread cutting teeth), and another non-cutting surface arranged adjacent the second main surface (i.e. between the second main surface and the row of thread cutting teeth). One or both of these non-cutting surfaces may be employed as contact surfaces when mounting the cutting element within a slot of a thread milling tool body. Hence, if employing both such non-cutting surfaces as contact surfaces, a total of four contact surfaces will abut corresponding support surfaces in a slot of a thread milling tool body when the cutting element is mounted therein.

According to some embodiments, at least one of the contact surfaces of each peripheral sub-surface has a different length than at least one of the contact surfaces on any of the adjacent peripheral sub-surfaces along the peripheral surface. Thereby, if a slot in a thread milling tool in which the cutting element is to be mounted comprises corresponding support surfaces of different lengths, the cutting element is mountable within the slot only in a limited number of positions, preventing erroneous mounting of the cutting element within the slot.

According to another aspect, the invention relates to a thread milling tool comprising a tool body having a front end in which a slot is formed, a rear end and a central axis extending from the front end to the rear end, wherein the thread milling tool comprises a cutting element according to any of the embodiments described herein arranged in the slot such that the teeth comprised in both peripheral sub-surfaces of one of the pairs of opposed peripheral sub-surfaces are arranged at an operative position for milling a thread in a workpiece, whereas the teeth comprised in the other peripheral sub-surfaces are arranged at non-operative positions.

Thus, only the teeth of a single pair of peripheral sub-surfaces are operative when the cutting element is mounted in a certain orientation within the slot of the thread milling tool body. Thus, as an example, a cutting element having two pairs of peripheral sub-surfaces (i.e. four peripheral sub-surfaces) can be used in two different orientations (two times indexable), whereas a cutting element having three pairs of peripheral sub-surfaces (i.e. six peripheral sub-surfaces) can be used in three different orientations (three times indexable).

None of the teeth arranged at a non-operative position will interfere in a thread milling process. The exact arrangement to assure this will depend on, for example, the number of peripheral sub-surfaces (i.e. the angle between adjacent peripheral sub-surfaces) and the length of each peripheral sub-surface in relation to the number of thread cutting teeth and the size of each thread cutting tooth (i.e. type of thread to be machined).

The tool body may be made from a different material than the cutting element, such as steel. The rear end of the tool body may be adapted to be clamped directly or indirectly to a machine interface of a machine tool, e.g. a computerized numerical control (CNC) machine tool.

The cutting element may be arranged within the slot in the tool body such that the central axis of the cutting element is perpendicular, or substantially perpendicular, to the central axis of the tool body.

Each thread cutting tooth arranged at an operative position protrudes in a direction that is perpendicular, or substantially perpendicular, to the central axis of the thread milling tool. In other words, each of the two peripheral sub-surfaces that comprises thread cutting teeth in an operative position faces a direction that is perpendicular, or substantially perpendicular, to the central axis of the thread milling tool. By rotating such thread milling tool around its central axis, while applying a circular ramping movement of the tool, a thread can be milled in a workpiece, for example an internal thread in a hole of a workpiece.

According to some embodiments, the thread milling tool body further comprises a first and a second support surface arranged in the slot and abutting a first and a second contact surface, respectively, on the cutting element, wherein each of the first and second contact surfaces and the first and second support surfaces faces a direction that is oblique to the central axis of the thread milling tool.

Thereby, the cutting element is stably accommodated within the slot of the thread milling tool body, preventing any displacement of the cutting element within the slot. To fix the cutting element in position, a screw or a clamp or some other fastening element may be used.

Further possible features and benefits of this solution will become apparent from the detailed description below.

BRIEF DESCRIPTION OF DRAWINGS

The solution will now be described in more detail by means of exemplary embodiments and with reference to the accompanying drawings, in which:

Fig. 1 is a perspective view of a cutting element according to a first embodiment of the invention.

Fig. 2 is a plan view of a first main surface of the cutting element illustrated in Fig. 1.

Fig. 3 is a side view of the cutting element illustrated in Figs. 1-2, as seen from right in Fig. 2 towards the peripheral surface of the cutting element.

Fig. 4 is a perspective view of a thread milling tool body.

Fig.5 illustrates a thread milling tool comprising the thread milling tool body shown in Fig.4 and the cutting element shown in Figs. 1-3.

Fig. 6 is a perspective view of a cutting element according to a second embodiment.

Figs. 7-9 are corresponding views as in Figs. 1-3 but illustrating a cutting element according to a third embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

DETAILED DESCRIPTION OF EMBODIMENTS

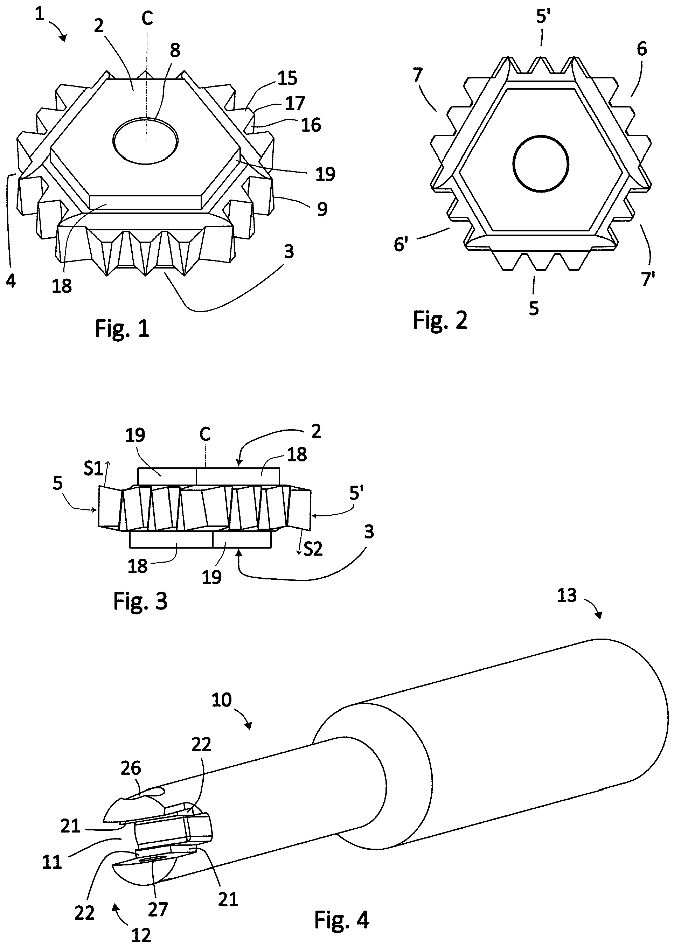

Figs. 1-3 illustrate a cutting element 1 according to a first embodiment. The cutting element 1 comprises a first main surface 2, a second main surface 3 and a peripheral surface 4. The peripheral surface 4 comprises six peripheral sub-surfaces 5, 5', 6, 6', 7, 7' pairwise arranged on opposite sides of the cutting element 1 and facing opposite directions when seen in a plan view of the first main surface, as seen in Fig. 2. The cutting element further comprises a through hole 8 extending from the first main surface 2 to the second main surface 3 along a central axis C of the cutting element.

Each peripheral sub-surface 5, 5', 6, 6', 7, 7' comprises three thread cutting teeth 9. Each tooth 9 comprises a rake face 15, a flank face 16 and a cutting edge 17 formed at the intersection between the rake face 15 and the flank face 16.

For each pair of peripheral sub-surfaces 5, 5', 6, 6', 7, 7', the teeth 9 of one subsurface 5, 6, 7 have a rake face 15 facing a first direction S1 (illustrated in Fig. 3), whereas the teeth 9 of the other subsurface 5', 6', 7' have a rake face 15 facing a second direction S2 that is opposite to the first direction S1.

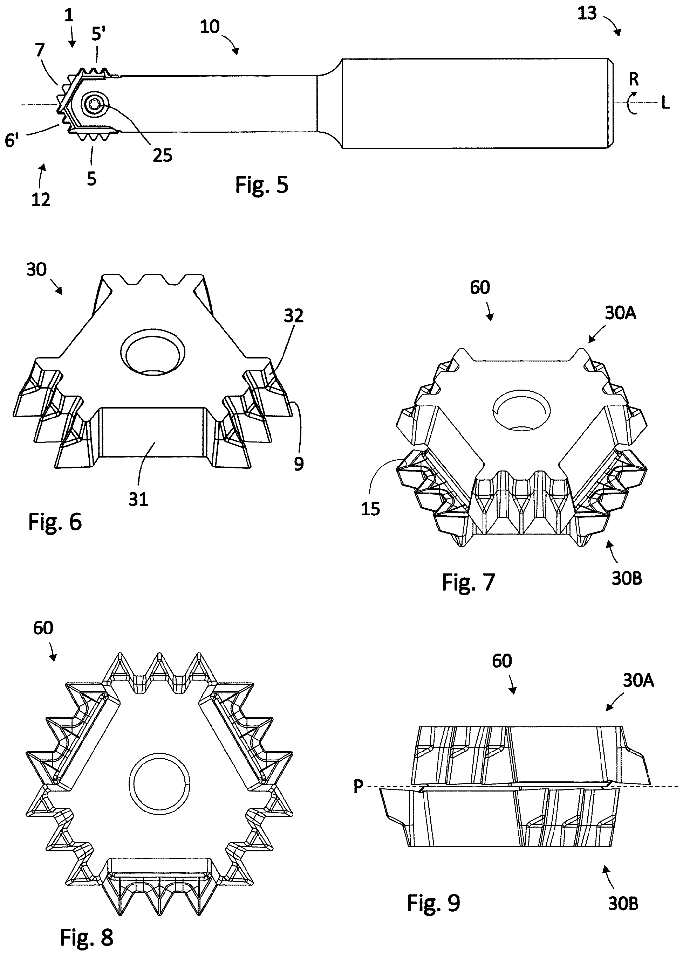

Fig. 4 shows a tool body 10 comprising a slot 11 in which the cutting element 1 is arrangeable, and Fig. 5 shows a thread milling tool including the tool body 10 and the cutting element 1. The tool body 10 has a front end 12, a rear end 13, and a tool body central axis L. The cutting element 1 is fixed within the slot 11 by a screw 25 extending through a hole 26 in the tool body on one side of the slot, further through the through hole 8 in the cutting element, and engaging a threaded hole 27 on the other side of the slot.

The cutting element 1 is mounted in the slot 11 of the tool body 10 such that both sub-surfaces of one of the pairs 5, 5' of peripheral sub-surfaces face directions that are perpendicular to the tool body central axis L, as seen in Fig. 5. These two peripheral sub-surfaces 5, 5' are in an operative position, i.e. the cutting teeth 9 thereof will cut a thread in a workpiece when the thread milling tool is used and rotated around the tool body central axis L in a rotation direction R. The cutting teeth 9 of the other peripheral sub-surfaces 6, 6', 7, 7', including the cutting teeth 9 of the peripheral sub-surfaces 6', 7 that extend out from the slot partly in a forward direction, are in a non-operative position and will not interfere in the cutting process.

Each peripheral sub-surface 5, 5', 6, 6', 7, 7' of the cutting element comprises two non-cutting surfaces 18, 19 of different length, as best seen in Fig. 3. These non-cutting surfaces are flat and used as contact surfaces arranged to abut respective support surfaces 21, 22 in the slot 11 of the tool body 10, illustrated in Fig. 4. When the cutting element is mounted in the slot, four contact surfaces 18, 19 on two adjacent peripheral sub-surfaces 6, 7' that are in a non-operative position abut respective support surfaces 21, 22 in the slot.

Since the contact surfaces 18, 19 and the corresponding support surfaces 21, 22 are of different lengths, the cutting element cannot be erroneously mounted in the slot. In other words, the cutting element can only be mounted for machining in a rotation direction R illustrated in Fig. 5. As a consequence, when the operative thread cutting teeth in the active peripheral sub-surfaces 5, 5' are worn, and the cutting element needs to be indexed (i.e. fresh thread cutting teeth placed in an operative position), the cutting element 1 must be removed from the slot 11, then rotated around its central axis C by an angle of 120°, and then mounted in the slot 11 again.

Fig. 6 illustrates a cutting element 30 according to a second embodiment. This cutting element also comprises six peripheral sub-surfaces, wherein three of the peripheral sub-surfaces each includes three thread cutting teeth 9, whereas each of the intermediate peripheral sub-surfaces only comprises a flat non-cutting surface 31, but no cutting teeth. Such cutting element 30 will still be indexable three times. However, a thread milling tool using such cutting element 30 will have reduced productivity when compared to the embodiment described with reference to figures 1-5 since only one set of cutting teeth 9 will engage the workpiece for each revolution of the thread milling tool. Each of the flat non-cutting surfaces 31 acts as a contact surface arranged to abut a corresponding support surface in a slot of a tool body when the cutting element 30 is mounted therein, in a similar way as described above with reference to the first embodiment. Each of the peripheral sub-surfaces that include thread cutting teeth 9 further comprises multiple small non-cutting surfaces 32 also acting as contact surfaces arranged to abut a support surface in the thread milling tool body.

Figs. 7-9 illustrate a cutting element 60 according to a third embodiment. As best seen in Figs. 7 and 9, the cutting element comprises two separate cutting element parts 30A, 30B, each being identical to the cutting element 30 shown in Fig. 6, wherein the cutting element parts 30A, 30B are secured with respect to each other when they are mounted in a slot of a tool body. By combining the cutting element parts 30A, 30B into a cutting element 60, each peripheral sub-surface will comprise three thread cutting teeth 9 and three small non-cutting contact surfaces 32 (from the peripheral sub-surface of one of the parts 30A, 30B) as well as a large flat non-cutting contact surface 31 (from the peripheral sub-surface of the other one of the parts 30A, 30B). In this embodiment, a central neutral plane P of the cutting element 60 corresponds to the interface between the cutting element parts 30A and 30B. The combination of the two parts 30A, 30B results in a cutting element similar to the cutting element according to the first embodiment described with reference to Figs. 1-5, wherein two sets of cutting teeth 9 will be in an operative position when the cutting element is mounted in a thread milling tool body. As for the other embodiments, the peripheral sub-surfaces are pairwise arranged on opposite sides of the cutting element 60 and facing opposite directions when seen in a plan view of the first main surface, as best seen in Fig. 8. As seen in Fig. 7, the rake face 15 of each tooth 9 comprises a chip groove, resulting in an increased positive rake angle. The chip groove may provide improved chip formation control and reduce cutting forces and temperature during machining.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A cutting element (1, 30, 60) for a thread milling tool, comprising

    - a first and a second main surface (2,3) arranged opposite each other and facing opposite directions, and
    - a peripheral surface (4) connecting the first and the second main surfaces, the peripheral surface comprising an even number of peripheral sub-surfaces (5, 5', 6, 6', 7, 7') that are pairwise arranged on opposite sides of the cutting element and facing opposite directions,

    wherein, for each pair of peripheral sub-surfaces, one sub-surface includes one or more thread cutting teeth (9) having a rake face (15) facing a first direction (SI), and the opposite sub-surface includes a non-cutting surface (18, 19, 31, 32) and/or one or more thread cutting teeth (9) having a rake face (15) facing a second direction (S2), wherein the second direction (S2) is opposite to the first direction (SI), **characterized in that** the number of peripheral sub-surfaces is at least four.

2. A cutting element according to claim 1, wherein the number of peripheral sub-surfaces is six.

3. A cutting element according to any of the previous claims, wherein each of the peripheral sub-surfaces includes one or more non-cutting surfaces and one or more thread cutting teeth.

4. A cutting element according to any of the previous claims, wherein each of the peripheral sub-surfaces includes two or more thread cutting teeth arranged in a row along the peripheral sub-surface.

5. A cutting element according to any of the previous claims, wherein the directions that two adjacent peripheral sub-surfaces along the peripheral surface face, when viewed in a plan view of the first or second main surface, differ by an angle equal to 360° divided by the total number of peripheral sub-surfaces.

6. A cutting element according to any of the previous claims, wherein each rake face comprises a chip groove.

7. A cutting element according to any of the previous claims, wherein the cutting element is a unitary body.

8. A cutting element according to any of the claims 1-6, wherein the cutting element comprises two separate parts (30A, 30B) detachably arranged to each other.

9. A cutting element according to any of the previous claims, comprising at least two contact surfaces facing different directions and arranged to abut respective support surfaces (21, 22) in a slot (11) of a tool body (10) for preventing displacement of the cutting element with respect to the tool body when the cutting element is mounted in the slot.

10. A cutting element according to claim 9 and 3, wherein the contact surfaces are formed by the non-cutting surfaces included in the peripheral sub-surfaces.

11. A cutting element according to claim 10, wherein each peripheral sub-surface includes two non-cutting surfaces forming separate contact surfaces.

12. A cutting element according to any of the claims 10-11, wherein, for each peripheral sub-surface, at least one of the contact surfaces has a different length than at least one of the contact surfaces on any of the adjacent peripheral sub-surfaces along the peripheral surface.

13. A thread milling tool comprising a tool body (10) having a front end (12) in which a slot (11) is formed, a rear end (13) and a central axis (L) extending from the front end to the rear end, wherein the thread milling tool comprises a cutting element (1, 30, 60) according to any of the claims 1 - 12 arranged in the slot (11) such that the teeth (9) comprised in both peripheral sub-surfaces of one of the pairs of opposed peripheral sub-surfaces are arranged at an operative position for milling a thread in a workpiece, whereas the teeth comprised in the other peripheral sub-surfaces are arranged at non-operative positions.

14. A thread milling tool according to claim 13 and comprising a cutting element according to any of the claims 9-12, further comprising a first and a second support surface (21, 22) abutting a first and a second contact surface, respectively, of the at least two contact surfaces, wherein each of the first and second contact surfaces and the first and second support surfaces faces a direction that is oblique to the central axis (L) of the thread milling tool.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 22 20 4738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SU 1 349 113 A1 (KASURIN E V [SU]) 30 May 1991 (1991-05-30) * figures 1-3 * | 1-4,6,7, 9-14 | INV. B23G5/18 |
| X | CN 208 495 998 U (SANT PREC MACHINERY LIMITED) 15 February 2019 (2019-02-15) * claims 1-3 * * figures 1-3 * | 1-12 | |
| X | US 3 829 921 A (DELANEY E) 20 August 1974 (1974-08-20) * figures 1-3 * | 1,3,4,7, 9-11 | |
| X | CN 215 999 001 U (NINGBO SICHUAN JINGREPUTATION MACHINERY SCIENCE AND TECH DEVELOPMENT L) 11 March 2022 (2022-03-11) * paragraph [0050] * * figure 1 * | 1,5-7,9 | |
| X | EP 0 119 175 A1 (SANTRADE LTD [CH]) 19 September 1984 (1984-09-19) * claim 4 * * figures 4, 5, 6 * | 1,2,4-7, 9 | TECHNICAL FIELDS SEARCHED (IPC) |
| A | WO 2014/081010 A1 (MITSUBISHI MATERIALS CORP [JP]) 30 May 2014 (2014-05-30) * figures 1-12 * | 8 | B23B B23C B23G |
| A | US 2016/263686 A1 (CHEN LI-CHENG [TW]) 15 September 2016 (2016-09-15) * figures 1-5 * | 1-14 | |

The present search report has been drawn up for all claims

| Place of search | Date of completion of the search | Examiner |
|---|---|---|
| The Hague | 11 April 2023 | Schäfer, Lisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 360 790 A1**

## ANNEX TO THE EUROPEAN SEARCH REPORT
## ON EUROPEAN PATENT APPLICATION NO.

EP 22 20 4738

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2023

| Patent document cited in search report | | Publication date | Patent family member(s) | | Publication date |
|---|---|---|---|---|---|
| SU 1349113 | A1 | 30-05-1991 | NONE | | |
| CN 208495998 | U | 15-02-2019 | NONE | | |
| US 3829921 | A | 20-08-1974 | NONE | | |
| CN 215999001 | U | 11-03-2022 | NONE | | |
| EP 0119175 | A1 | 19-09-1984 | EP | 0119175 A1 | 19-09-1984 |
| | | | JP | H0358843 B2 | 06-09-1991 |
| | | | JP | S59175902 A | 05-10-1984 |
| | | | SE | 452562 B | 07-12-1987 |
| | | | US | 4575888 A | 18-03-1986 |
| WO 2014081010 | A1 | 30-05-2014 | JP | 2014121772 A | 03-07-2014 |
| | | | WO | 2014081010 A1 | 30-05-2014 |
| US 2016263686 | A1 | 15-09-2016 | CN | 104439564 A | 25-03-2015 |
| | | | EP | 3050662 A1 | 03-08-2016 |
| | | | JP | 2016532569 A | 20-10-2016 |
| | | | KR | 20160054602 A | 16-05-2016 |
| | | | US | 2016263686 A1 | 15-09-2016 |
| | | | WO | 2015043041 A1 | 02-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005080037 A